Europäisches Patentamt

European Patent Office

Office européen des brevets

(19)

(11) **EP 0 890 600 A1**

## (12) EUROPÄISCHE PATENTANMELDUNG

(43) Veröffentlichungstag:
**13.01.1999 Patentblatt 1999/02**

(21) Anmeldenummer: 98111966.2

(22) Anmeldetag: **29.06.1998**

(51) Int. Cl.⁶: $C08J\ 3/21$, $C08K\ 9/04$
// $C08L21:00$

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **10.07.1997 DE 19729527**

(71) Anmelder: **BAYER AG
51368 Leverkusen (DE)**

(72) Erfinder: **Scholl, Thomas, Dr.
51469 Bergisch Gladbach (DE)**

(54) **Verfahren zur Herstellung von füllstoffhaltigen Kautschukmischungen**

(57)     Mischungen aus oxidischen und/oder silikatischen Füllstoffen und Kautschuken werden hergestellt, indem man der Lösung eines Kautschuks in einem organischen Lösungsmittel mindestens einen hydrophobierten oxidischen und/oder silikatischen Füllstoff in Mengen von 0,5 bis 300 Gew.-Teile, bezogen auf 100 Gew.-Teile Kautschuk, zusetzt, wobei die Lösung des Kautschuks weitere Hilfsmittel für die Aufarbeitung, Verarbeitung und Stabilisierung sowie zusätzliche Füllstoffe enthalten kann, und anschließend das Lösungsmittel bei Temperaturen von 50 bis 200°C durch Wasserdampfdestillation entfernt.

EP 0 890 600 A1

**Beschreibung**

Die vorliegende Erfindung betrifft ein Verfahren zur Herstellung von Mischungen aus Lösungskautschuken und oberflächenmodifizierten oxidischen oder silikatischen Füllstoffen und ihre Verwendung zur Herstellung von Kautschukvulkanisaten. Die nach dem neuen Verfahren erhaltenen Kautschukmischungen eignen sich zur Herstellung von hochverstärkten, abriebbeständigen Formkörpern, insbesondere zur Herstellung von Reifen die einen niedrigen Rollwiderstand und einen hohen Abriebwiderstand aufweisen.

Die Herstellung von kieselsäuregefüllten Kautschukmischungen erfordert im Vergleich zu rußgefüllten Kautschukmischungen einen deutlich höheren Mischaufwand und darüberhinaus in der Regel den Zusatz eines teuren füllstoffaktivierenden polysulfidischen Silylethers. Siehe hierzu DE-OS 2.141.159 und 2.255.577. Der höhere Mischaufwand für die Einarbeitung der Kieselsäure könnte demgegenüber prizipiell vermieden werden, wenn die Kieselsäure in eine Kautschuklösung direkt nach der Herstellung des Lösungskautschuks eingearbeitet würde. Die derzeitig zur Reifenherstellung eingesetzten Fällungskieselsäuren eignen sich jedoch nicht ohne Vorbehandlung für einen derartigen Prozeß, da sie bei der Entfernung des Lösungsmittels mit Wasserdampf nicht gefällt werden, sondern zu einem großen Teil in der Wasserphase verbleiben.

US-PS 5.166.227 beschreibt ein Verfahren zur Herstellung von kieselsäuregefüllten Emulsionskautschukmischungen, in dem eine Dispersion von Kieselsäure und ein Kautschuklatex gemeinsam sprühgetrocknet wird. Dieses Verfahren hat den Nachteil, daß das gesamte Wasser energieaufwendig verdampft werden muß.

Kautschukmischungen mit veresterten Kieselsäuren sind in US-PS 2.727.867 beschrieben, wobei hier Mischverfahren erwähnt werden, in denen die modifizierte Kieselsäure gar nicht oder nur kurzzeitig und bei niedriger Temperatur mit Wasser in Berührung kommt, so daß die Gefahr einer Hydrolyse nicht gegeben ist.

Es wurde jetzt gefunden, daß sich spezielle hydrophobierte oxidische und silikatische Füllstoffe sehr leicht in Kautschuklösungen einarbeiten lassen und nach dem Entfernen des Lösungsmittels mit Wasserdampf vollständig und gut dispergiert im Kautschuk verbleiben. Die so hergestellten Kautschuk/Füllstoff-Masterbatche eignen sich zur Herstellung von Kautschukmischungen mit guter Verarbeitbarkeit, insbesondere gutem Fließverhalten und günstiger Vulkanisationskinetik, und zur Herstellung von hochverstärkten Vulkanisaten, insbesondere Reifenlaufflächen mit geringem Rollwiderstand und mit günstigen Rohstoffkosten.

Gegenstand der vorliegenden Patentanmeldung ist daher ein Verfahren zur Herstellung von Mischungen aus oxidischen und/oder silikatischen Füllstoffen und Kautschuken, das dadurch gekenzeichnet ist, daß man der Lösung eines Kautschuks in einem organischen Lösungsmittel mindestens einen hydrophobierten oxidischen und/oder silikatischen Füllstoff in Mengen von 0,5 bis 300, bevorzugt 0,5 bis 150, Gew.-Teilen, bezogen auf 100 Gew. Teile Kautschuk, zusetzt, wobei die Lösung der Kautschuke weitere Hilfsmittel für die Aufarbeitung, Verarbeitung und Stabilisierung sowie zusätzliche Füllstoffe enthalten kann, und anschließend das Lösungsmittel bei Temperaturen von 50 bis 200° C durch Wasserdampfdestillation entfernt.

Unter dem Begriff hydrophobierte oxidische und silikatische Füllstoffe werden oxidische und silikatische Füllstoffe verstanden, die bei Raumtemperatur nicht von Wasser benetzt werden. Bevorzugte Füllstoffe besitzen einen Gehalt an physikalisch gebundenem Wasser von $\leq 3$ Gew. %, besonders bevorzugt $\leq 1$ %, und eine „Methanolbenetzbarkeit" von 1 - 60 Gew. %, bevorzugt 5 - 50 Gew. %. Die „Methanolbenetzbarkeit" gibt hierbei den Mindestgehalt (in Gewichtsprozent) an Methanol in einem Methanol/Wasser-Gemisch an, das in der Lage ist, den Füllstoff zu benetzen.

In der Literatur sind zahlreiche geeignete Hydrophobierungsmethoden für oxidische und silikatische Füllstoffe beschrieben, wie z.B. die Behandlung von Fällungskieselsäuren und -silikaten mit anorganischen und organischen Fluoriden, wie in US-PS 2.477.695 und 2.625.492 beschrieben, oder die Herstellung oder Nachbehandlung von Fällungskieselsäuren durch Neutralisation von Silikatlösungen mit Organohalogensilanen, wie z.B. Dimethyldichlorsilan, wie in DE-AS 1.229.504 beschrieben.

Besonders gut geeignet sind hydrophobierte Füllstoffe, ausgehend von oxidischen und silikatischen Füllstoffen, die

(A) vor, während oder nach einer Trocknungsbehandlung, durch die der Gehalt an physikalisch gebundenem Was-ser auf $\leq 3$ Gew. % gesenkt wird, mit 0,5 bis 200, bevorzugt 1 bis 50 Gew.-Teilen, bezogen auf 100 Gew.-Teile Füllstoff, einer wasserrunlöslichen organischen Verbindung (I) versetzt wurden

oder

(B) vor, während oder nach einer Trocknungsbehandlung, durch die der Gehalt an physikalisch gebundenem Was-ser auf $\leq 3$ Gew. % gesenkt wird, unter teilweiser oder vollständiger Umsetzung der unter teilweiser oder vollständiger Umsetzung der Silanolgruppen mit 0,5 bis 200, bevorzugt 1 bis 50 Gew.-Teilen, bezogen auf 100 Gew.-Teile Füllstoff, einer hydroxylgruppenhaltigen Verbindung (II) zur Reaktion gebracht wurden

oder

C) vor, während oder nach einer Trocknungsbehandlung, durch die der Gehalt an physikalisch gebundenem Wasser auf ≤ 3 Gew. % gesenkt wird, unter teilweiser oder vollständiger Umsetzung der Silanolgruppen mit 0,1 bis 50, bevorzugt 0,1 bis 10 Gew.-Teilen, bezogen auf 100 Gew.-Teile Füllstoff einer Siliciumverbindung (III) zur Reaktion gebracht wurden.

Das erfindungsgemäße Verfahren ist - wie erwähnt - dadurch gekennzeichnet, daß man eine Kautschuklösung mit 0,5 bis 300, bevorzugt 0,5 bis 150 Gew.-Teilen (bezogen auf 100 Gew.-Teile Kautschuk) eines hydrophobierten oxidischen und/oder silikatischen Füllstoffs versetzt und anschließend das Lösungsmittel bevorzugt durch Wasserdampfdestillation bei Temperaturen von 50 bis 200° C, gegebenenfalls im Vakuum oder unter Druck, entfernt. In dem Gemisch aus Kautschuk, Lösungsmittel und Füllstoff können weitere Hilfsmittel für die Aufarbeitung, Verarbeitung und Stabilisierung sowie zusätzliche Füllstoffe enthalten sein, wie z.B. Entschäumer, Weichmacher, Antioxidantien, Füllstoffaktivatoren und Ruß.

Die erfindungsgemäß zu verwendenden hydrophobierten silikatischen und/oder oxidischen Füllstoffe (A) können hergestellt werden, in dem der silikatische oder oxidische Füllstoff vor, während oder nach einem Trocknungsprozess, in dem der Wassergehalt bevorzugt auf ≤ 3 Gew. %, besonders bevorzugt ≤ 1 Gew. %, abgesenkt wird, mit einer wasserunlöslichen organischen Verbindung (I) gemischt wird. Unter dem Wassergehalt des Füllstoffs wird derjenige Gehalt an physikalisch gebundenem Wasser verstanden, der bei einer Trocknungstemperatur von 105° C entfernt werden kann (DIN ISO 787 / 2). Geeignete wasserunlösliche Verbindungen (I) sind z.B. ungesättigte und gesättigte Fettsäuren und Wachse, wie in DE-OS 2.419.759 beschrieben, synthetische Weichmacher, wie Phthalsäuredioctylester, Adipinsäureester, modifizierte Fettsäuren, wie dimerisierte und oligomerisierte Fettsäuren, natürliche ungesättigte Öle, wie Olivenöl, Rapsöl, Rizinusöl, Sonnenblumenöl, Baumwollsaatöl, Leinöl, Erdnußöl sowie die entsprechenden ungesättigten und hydrierten Fettsäuren und deren Umesterungsprodukte mit ein- bis sechswertigen $C_1$-$C_{20}$-Alkoholen, wie naphthenische, paraffinische und aromatische Mineralöle, wasserunlösliche Alkohole, wie z.B. Octanol, Dodecanol, Stearylalkohol, Undecenylalkohol und Oleylalkohol, synthetische Öle, wie z.B. Schmieröle auf Polyester oder Polyetherbasis, Silikonöle, wie z.B. Polydimethylsiloxane, Schwefel und Dialkylpolysulfide, wie z.B. Dioctylpolysulfid, Addukte von Schwefel an ungesättigten Ölen und ungesättigte Fettsäureestern, wie z.B. Umsetzungsprodukte von Schwefel mit Oleylalkohol, Olivenöl, Rapsöl oder Rizinusöl, niedermolekulare Kautschuke, insbesondere Polybutadienöl, niedermolekulares Butadien/Acrylniril-Copolymer, Polyisobutylen, flüssiger Naturkautschuk. Darüberhinaus können unter Verwendung von Lösungsmitteln oder in Latexform auch hochmolekulare Kautschuke, wie Naturkautschuk, Butadienkautschuk, Styrol/Butadien-Kautschuk, Acrylnitril/Butadien-Kautschuk und Thermoplaste verwendet werden. Bevorzugte Molekulargewichte liegen zwischen 150 und 10.000. Die Verbindungen (I) können in Substanz, in Lösung oder als Latex auf den silikatischen oder oxidischen Füllstoff aufgetragen werden. Bevorzugt werden sie lösungsmittelfrei oder als wäßrige Dispersion aufgetragen. Der silikatische oder oxidische Füllstoff selber kann als wäßrige Dispersion oder wasserfeuchter Filterkuchen oder in vergetrockneter Form vorgelegt werden. Eine Auftragungsmethode für erfindungsgemäß zu verwendende Wachse und Thermoplaste aus wäßriger Dispersion während oder unmittelbar nach dem Fällprozeß von Fällungskieselsäuren ist beispielsweise in US-PS 3.607.337 beschrieben. Die Trocknung kann in beispielsweise durch Sprühtrocknung, im Drehrohrofen oder mittels Bandtrockner erfolgen.

Besonders bevorzugte Verbindungen (I) sind natürliche ungesättigte Öle, wie Olivenöl, Rapsöl, Rizinusöl, Sonnenblumenöl. Baumwollsaatöl, Leinöl, Erdnußöl, sowie die entsprechenden ungesättigten und hydrierten Fettsäuren und deren Veresterungsprodukte mit ein bis sechswertigen C1-C30-Alkoholen. Die Verbindungen (I) können alleine oder im Gemisch eingesetzt werden.

Die erfindungsgemäß zu verwendenden hydrophobierten silikatischen und/oder oxidischen Füllstoffe (B) können hergestellt werden, in dem der silikatische oder oxidische Füllstoff vor, während oder nach einem Trocknungsprozess, in dem der Wassergehalt auf ≤ 3 Gew. %, bevorzugt ≤ 1 Gew. %, abgesenkt wird, mit einer hydroxylgruppenhaltigen Verbindung (II) zur Reaktion gebracht wird. Bevorzugte hydroxylgruppenhaltige Verbindungen (II) sind 1-Decanol, Undecenylalkohol, Dodecanol, Dodecenalkohol, Hexadecanol, Hexadecenol, Octadecanol, Behenylalkohol, Oleylalkohol, Ricinolsäure, Zimtalkohol, Ricinusöl, Hydroxiethyl-(meth)-acrylat, 4-Hydroxibutyl-(meth)-acrylat, hydroxylgruppenhaltiges Polybutadienöl mit bevorzugten OH-Zahlen von 20 - 200 (Poly BD Resins der Elf Atochem oder Hycar HT der BFGoodrich), hydroxygruppenhaltige ungesättigte Polyester mit mittleren Molgewichten von 1.000 bis 20.000, hydroxylgruppenhaltige hydrophobe Polyether, wie z.B. Additionsprodukte aus 1 - 200 mol Propylenoxid pro mol Alkohol.

Die Verbindungen (II) können alleine oder im Gemisch eingesetzt werden oder auch im Gemisch mit den Verbindungen (I), die dann gegebenenfalls an den Füllstoff nur physikalisch gebunden werden.

Die Umsetzung der Füllstoffe mit den hydroxylgruppenhaltigen Verbindungen (II) kann in Substanz oder in organischen Lösungsmitteln oder im Vakuum bei Temperaturen oberhalb von Raumtemperatur (20°C) bis unterhalb der Zersetzungstemperatur der hydroxylgruppenhaltigen Verbindungen (II) erfolgen. Zur Durchführung der Veresterung bei Temperaturen unter 100° C empfiehlt sich eine vorherige Hitzebehandlung des oxidischen oder silikatischen Füllstoffs bei Temperaturen von 300-800° C, wie sie in US-PS 2,736,669 beschrieben ist. Ansonsten werden Temperaturen von 100°C bis unterhalb der Zersetzungstemperatur der hydroxylgruppenhaltigen Verbindung (II) bevorzugt. Die oxidischen oder silikatischen Füllstoffe können auch als wasserfeuchte Produkte oder gar als Aufschlämmung in Wasser vorgelegt werden. Die Restfeuchte wird mit dem bei der Reaktion gebildeten Wasser aus dem Reaktionsprodukt entfernt. Die Entfernung des Reaktionswassers geschieht vorteilhafterweise sofort während der Reaktion oder in einem nachgeschalteten Trocknungsschritt. Der Erfolg der Veresterung läßt sich beispielsweise dadurch nachweisen, daß sicht mit geeigneten Lösungsmitteln die hydroxylgruppenhaltige Verbindung (II) nicht mehr extrahieren läßt. Ganz besonders bevorzugte hydroxylgruppenhaltige Verbindungen (II) sind $C_8$-$C_{36}$-Alkyl-monoalkohole und $C_5$-$C_{36}$-Alkyl-polyole, insbesondere n- und iso-Octylakohol, Nonanol, Decanol, Dodecanol, Octadecylakohol, Octadecenylalkohol, Neopentylglykol, Trimethylolpropan und Rizinusöl.

Geeignete Lösungsmittel zur Durchführung der Oberflächenreaktion mit den Verbindungen (II) sind beispielsweise gesättigte oder ungesättigte, aliphatische oder aromatische Kohlenwasserstoffe, chlorierte aliphatische oder chlorierte aromatische Kohlenwasserstoffe und Alkohole.

Die erfindungsgemäß zu verwendenden hydrophobierten silikatischen und/oder oxidischen Füllstoffe (C) können hergestellt werden, in dem der silikatische oder oxidische Füllstoff vor, während oder nach einem Trocknungsprozess, in dem der Wassergehalt bevorzugt auf $\leq 3$ Gew. %, besonders bevorzugt $\leq 1$ Gew. %, abgesenkt wird, mit einer gegenüber Si-OH-Gruppen des Füllstoffs reaktiven Siliciumverbindung (III) zur Reaktion gebracht. Die hierbei zu verwendenden Siliciumverbindungen (III) sind Alkoxi-Silane, wie z.B. Tetramethoxi- und Tetraethoxisilan, Alkylalkoxisilane, wie Octyl-trimethoxi- und Octyltriethoxisilan, Octadecyltriethoxisilan, Dimethyldiethoxisilan, Trimethylethoxisilan, Polydimethylsiloxane mit reaktiven Si-OH-Gruppen und mit reaktiven Alkoxisilylethergruppen, wie z.B. Methoxi- und Ethoxireste, cyclische Dimethylsiloxanether, wie Octamethylcyclotetrasiloxan, Trimethylsilylamine, wie Hexamethyldisilazan oder schwefelhaltige Silylether, insbesondere Bis-(trialkoxisilyl-alkyl)-polysulfide, wie in DE 2.141.159 und DE-AS 2.255.577 beschrieben, oligomere und/oder polymere schwefelhaltige Silylether der DE-OS 4.435.311 und EP-A 670.347, Mercaptoalkyltrialkoxisilane, insbesondere Mercaptopropyltriethoxisilan, Thiocyanatoalkylsilylether, wie z.B. in DE-OS 19.544.469 beschrieben. Ganz besonders bevorzugt werden Bis-(triethoxisilypropyl)-tetrasulfid, das entsprechende Disulfid, sowie Polysulfide gemäß EP 670.347, hergestellt aus Chlorpropyltriethoxisilan, Dichloralkanen und Natriumpolysulfid, Oligo-oder Poly-(4-(2-triethoxisilylethyl)cyclohexan-1,2-diyl)-bisoligosulfide der DE 4.435.311 sowie Thiocyanatopropyl-triethoxisilan.

Die Reaktionstemperaturen hierfür liegen zwischen Raumtemperatur und der Zersetzungstemperatur der Siliciumverbindung. Die Reaktion kann gegebenenfalls durch saure oder alkalische Katalysatoren beschleunigt werden. Beispiele hierfür sind Ammoniak und Natriumalkoholat.

Die hydrophobierten Füllstoffe werden von Wasser nicht benetzt und besitzen Methanolbenetzbarkeiten von 1 bis 60 %, bevorzugt 5 bis 50 %. Die Methanolbenetzbarkeit gibt hierbei den Gew.-Anteil von Methanol in einem Methanol/Wasser-Gemisch an, der gerade in der Lage ist, den Füllstoff zu benetzen. Die Bestimmung der Methanolbenetzbarkeit wird wie folgt ausgeführt:

200 mg der Kieselsäure und 50 ml Wasser werden in einen 250 ml Rundkolben mit Magnetrührer gegeben. Die (teil-) hydrophobierte Kieselsäure bleibt an der Wasseroberfläche. Anschließend taucht man die Spitze einer mit Methanol gefüllten Meßpipette in die flüssige Phase (um einen direkten Kontakt mit der Kieselsäure zu vermeiden) und läßt das Methanol langsam zufließen. Dabei wird mit dem Magnetrührer gerührt, so daß in der Flüssigkeit ein Wirbel entsteht. Es wird solange Methanol zugegeben, bis die Festsubstanz benetzt ist. Dies ist der Fall, wenn die Kieselsäure nicht mehr über die ganze Oberfläche der flüssigen (bereits Methanol enthaltenden) Phase verteilt und die relativ klare filmfreie Flüssigkeit sichtbar wird. Auswertung: Die Angabe der Methanolbenetzbarkeit erfolgt in Gew.-% Methanol der Methanol/Wasser-Mischung nach der Formel

$$\text{Methanolbenetzbarkeit (in Gew.-\%)} = (0{,}79 \times \text{Anzahl ml MeOH} / 0{,}79 \times \text{Anzahl ml MeOH} + 50) \times 100$$

Als oxidische und silikatische Füllstoffe sind alle bekannten natürlichen oder synthetischen Füllstoffe der entsprechenden Art zu verstehen. Dies sind beispielsweise: gefällte oder pyrogene Kieselsäure, Aluminiumhydroxid, Aluminiumsilikat, Calciumsilikat, Calciumsulfat, China Clay und Calcinierter Clay.

Besonders bevorzugt sind:

- hochdisperse Kieselsäuren, hergestellt z.B. durch Fällung von Lösungen von Silikaten oder Flammenhydrolyse der Silikate, von Siliciumhalogeniden mit spezifischen Oberflächen von 5-1000, vorzugsweise 20-400 m2/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-,Ti-oxiden vorliegen.

- Synthetische Silikate, wie Aluminiumsilikat, Erdalkalisilikate, wie Magnesiumsilikat oder Calciumsilikat, mit BET-Oberflächen von 20-400 m2/g und Primärteilchendurchmessern von 10-400 nm.

- Natürliche Silikate, wie Kaolin und andere natürlich vorkommende Kieselsäuren

- Glasfasern und Glasfaserprodukte (Matten, Stränge) oder Mikroglaskugeln

- Metalloxide, wie Zinkoxid, Calciumoxid, Magnesiumoxid, Aluminiumoxid

- Metallcarbonate, wie Magnesiumcarbonat, Calciumcarbonat, Zinkcarbonat

- Metallhydroxide, wie Aluminiumhydroxid, Magnesiumhydroxid.

Zur Herstellung von insbesondere hellgefüllten Kautschukmischungen nach dem erfindungsgemäßen Verfahren eignen sich im Prinzip alle Kautschuke, von denen sich Lösungen in organischen Lösungsmitteln herstellen lassen. Diese umfassen Naturkautschuk und Synthesekautschuke. Bevorzugte Synthesekautschuke sind beispielsweise bei W. Hofmann, Kautschuktechnologie, Gentner Verlag, Stuttgart 1980, beschrieben. Sie umfassen u.a.

| | |
|---|---|
| BR | - Polybutadien |
| ABR | - Butadien/Acrylsäure-C1-4-alkylester-Copolymere |
| CR | Polychloropren |
| IR | - Polyisopren |
| SBR | - Styrol/Butadien-Copolymerisate mit Styrolgehalten von 1-60, vorzugsweise 20-50 Gew. % |
| IIR | - Isobutylen/Isopren-Copolymerisate |
| NBR | - Butadien/Acrylnitril-Copolmere mit Acrylnitrilgehalten von 5-60, vorzugsweise 10-40 Gew. % |
| HNBR | - teilhydrierter oder volllständig hydrierter NBR-Kautschuk |
| EPDM | - Ethylen/Propylen/Dien-Copolymerisate |

sowie Mischungen dieser Kautschuke. Für die Herstellung von Kfz-Reifen mit Hilfe der oberflächenmodizierten Füllstoffe sind insbesondere Naturkautschuk, Emulsions-SBR sowie Lösungs-SBR-Kautschuke mit einer Glastemperatur oberhalb von -50° C, die ggf. mit Silylethern oder anderen funktionellen Gruppen, modifiziert sein können, wie z.B. in der EP-A 447.066 beschrieben, Polybutadienkautschuk mit hohem 1.4-cis-Gehalt (> 90 %), der mit Katalysatoren auf Basis Ni, Co, Ti oder Nd gergestellt wird, sowie Polybutadienkautschuk mit mit einem Vinylgehalt von 0 - 75 % sowie deren Mischungen von Interesse.

Ganz besonders vorteilhaft eignet sich das neue Verfahren zur Herstellung von hellgefüllten Lösungs-SBR und Lösungs-Polybutadien-Mischungen, da diese nach der Herstellung im selben Lösungsmittel weiterverarbeitet werden können und besonders gute reifentechnische Eigenschaften zeigen.

Das erfindungsgemäße Verfahren wird in der Weise durchgeführt, daß man eine Kautschuklösung mit 0,5 bis 300, bevorzugt 0,5 bis 200 Gew.-Teilen (bezogen auf 100 Gew.-Teile Kautschuk) eines hydrophobierten oxidischen oder silikatischen Füllstoffs versetzt und anschließend das Lösungsmittel durch Wasserdampfdestillation bei Temperaturen von 50-200°C, gegebenenfalls im Vakuum oder unter Druck von 0 bis 10 atm, entfernt. In dem Gemisch aus Kautschuk, Lösungsmittel und Füllstoff können weitere Hilfsmittel für die Aufarbeitung, Verarbeitung und Stabilisierung sowie weitere Füllstoffe enthalten sein, wie z.B. Entschäumer, Weichmacher, Antioxidantien, Füllstoffaktivatoren, Ruß.

Der gelöste Kautschuk kann in einer besonders bevorzugten Ausführungsform des erfindungsgemäßen Verfahrens während der Entfernung des Lösungsmittels in Wasser koaguliert werden, beispielsweise durch Eintropfen der Kautschuklösung in heißes Wasser oder durch gemeinsames Verdüsen der Kautschuklösung mit Wasserdampf und Fällen in Wasser.

Als Lösungsmittel zum Lösen der erfindungsgemäß eingesetzten Kautschuke kommen insbesondere aliphatische, cycloaliphatische und aromatische Lösungsmittel in Frage. Kohlenwasserstoffe mit 2 bis 12 Kohlenstoffatomen werden besonders bevorzugt, wie n-Butan, iso-Butan, n- und iso-Pentan, Hexan, Cyclohexan, Propen, 1-Buten, trans-2-Buten, 1-Penten, 2-Penten, 1-Hexen, 2-Hexen, Benzol, Toluol, Xylol, Ethybenzol. Die Lösungsmittel können einzeln oder im Gemisch eingesetzt werden.

Der Gehalt an Kautschuk in der Lösung liegt hierbei bei 0,5 bis 50 Gew. % und ist vor allem durch die Viskosität der Lösung limitiert. Der Gehalt an Kautschuk sollte aus ökonomischen Gründen möglichst hoch sein. Besonders bevorzugte Konzentrationen liegen bei 5 bis 35 Gew. % Kautschuk.

Besonders bevorzugte Gehalte an hydrophobiertem Füllstoff (A, B, C) liegen - wie erwähnt - bei 20 bis 125 Gew. Teile pro 100 Gew.-Teile Kautschuk.

Zur Verbesserung der Fließfähigkeit empfiehlt sich ferner der Zusatz eines Weichmachers, insbesondere eines paraffinischen, naphthenischen oder aromatischen Weichmachers, in Mengen von 1 bis 100 Gew.-Teilen, bezogen auf 100 Gew.-Teile Kautschuk. Ganz besonders bevorzugt werden aromatische Weichmacher in Mengen von 5 bis 50 Gew. Teilen eingesetzt.

Darüberhinaus können die Kautschuk-Lösungen weitere Hilfsmittel, wie Füllstoffaktivatoren, wie z.B. Bis-(triethoxisilylpropyl)-disulfid und -tetrasulfid sowie die schwefelhaltigen Silylether der EP-A 466.066 und EP-A 670.347, Thiocyanatopropyltriethoxisilan sowie Mercaptopropyltriethoxisilan sowie Entschäumer und Antioxidantien enthalten. Auch Füllstoffe wie Russe oder Kautschukgele können in Mengen bis 100 Gew. Teile pro 100 Teile Kautschuk der Kautschuklösung zugesetzt werden. Die weiteren Hilfsmittel und Füllstoffe können als solche oder als wäßrige Dispersionen zugegeben werden.

Zur Herstellung von Kautschukvulkanisaten aus den erfindungsgemäßen Kautschukmischungen (Masterbatches) können noch weitere Kautschuke - entsprechend der zuvor erwähnten - und Kautschukhilfsprodukte zugemischt werden, insbesondere weitere Dienkautschuke, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, Trimethylolpropan oder schwefelhaltige Silylether, die in der Gummiindustrie bekannt sind. Den Kautschukmischungen können auch weitere Füllstoffe zugemischt werden. Dies sind neben hydrophobierten und nichthydrophobierten oxidischen oder silikatischen Füllstoffen, entsprechend der zuvor erwähnten, auch Ruße. Die hierbei zu verwendenden Russe sind nach dem Flammruß, Furnace- oder Gasrußverfahren hergestellt und besitzen BET-Oberflächen von 20 bis 200 $m^2$/g, wie z.B. SAF-, ISAF-, HAF-, FEF- oder GPF-Ruße. Als weitere Füllstoffe können den Kautschukmischungen auch Kautschukgele, insbesondere solche auf Basis Polybutadien, Polychloropren, NBR oder SBR-Kautschuk zugemischt werden.

Besonders bevorzugte Kautschukmischungen enthalten neben Kautschuk, Füllstoff und weiteren Kautschukhilfsmitteln 0,5 bis 15 Gew. Teile, bezogen auf 100 Gew.-Teile Kautschuk, schwefelhaltige Silylether als Füllstoffaktivatoren, insbesondere Bis-(trialkoxisilyl-alkyl)-polysulfide, wie in DE 2.141.159 und DE-AS 2.255.577 beschrieben, oligomere und/oder polymere schwefelhaltige Silylether der DE-OS 4.435.311 und EP-A 670.347, Mercapatoalkyltrialkoxisilane, insbesondere Mercaptopropyltriethoxisilan, Thiocyantoalkylsilylether, wie z.B. in DE-OS 19.544.469 beschrieben.

Ganz besonders bevorzugt werden Bis-(triethoxisilylpropyl)-tetrasulfid, das entsprechende Disulfid, sowie Polysulfide gemäß EP 670.347 hergestellt aus Chlorpropyltriethoxisilan, Dichloralkanen und Natriumpolysulfid, Oligo-oder Poly-(4-(2-triethoxisilylethyl)cyclohexan-1,2-diyl)-bisoligosulfide der DE 4.435.311 sowie Thiocyanatopropyl-triethoxisilan. Die genannten Verbindungen sind auch nach der Hydrophobierung der oxidischen und silikatischen Füllstoffe überraschend gut wirksam.

Die Kautschukhilfsmittel werden in üblichen Mengen, die sich unter anderem nach dem Verwendungszweck richten, eingesetzt. Übliche Mengen sind z.B. Mengen von 0.1-50 Gew. % bez. auf Gesamtmenge an Kautschuk.

Als Vernetzer bei der Herstellung von Kautschukvulkanisaten können Schwefel, Schwefelspender oder Peroxide eingesetzt werden. Die erfindungsgemäßen Kautschukmischungen können darüberhinaus Vulkanisationsbeschleuniger enthalten. Beispiele für geeignete Vulkanisationsbeschleuniger sind Mercaptobenzthiazole, Guanidine, Thiurame, Dithiocarbamate, Thioharnstoffe und Thiocarbonate. Die Vernetzungsbeschleuniger und Schwefel oder Peroxide werden in Mengen von 0.1 bis 10 Gew. %, bevorzugt 0,1 bis 5 Gew.-%, bezogen auf Gesamtmenge an Kautschuk, eingesetzt.

Die Abmischung der erfindungsgemäßen hellgefüllten Kautschukmischungen mit weiteren Kautschuken und Kautschukhilfsmitteln kann in üblichen Mischaggregaten, wie Walzen, Innenmischern und Mischextrudern, durchgeführt werden.

Die Vulkanisation kann bei Temperaturen von 100-200° C, bevorzugt 130 bis 180° C, ggf. unter Druck von 10-200 bar, erfolgen.

Die erfindungsgemäßen Kautschukmischungen und die daraus hergestellten Vulkanisate eignen sich zur Herstellung von Formkörpern, z.B. für die Herstellung von Kabelmänteln, Schläuchen, Treibriemen, Förderbändern, Walzenbelägen, Reifen, Schuhsohlen, Dichtungsringen und Dämpfungselementen und ganz besonders zur Herstellung rollwiderstandsarmer Reifenlaufflächen.

## Beispiele

### Beispiel 1 Mit Oleylalkohol oberflächenbehandelte Kieselsäure

500 g Vulkasil S (hochaktive gefällte Kieselsäure mit BET-Oberfläche 180 $m^2$/g der Bayer AG, enthält ca. 5 Gew: % Wasser)) und 50 g Oleylakohol werden 4 Stunden unter Rühren auf 200-220°C erhitzt wobei 33 g Wasser abdestillieren. Man erhält 517 g eines weißen Pulvers. Die so modifizierte Kieselsäure wird von Wasser nicht benetzt. Methanolbenetzbarkeit: 27 Gew. %.

### Beispiel 2 Mit Undecenylalkohol oberflächenbehandelte Kieselsäure

500 g Vulkasil S (hochaktive gefällte Kieselsäure mit BET-Oberfläche 180 $m^2$/g der Bayer AG) und 50 g 10-Undecen-1-ol wurden unter Rühren 4 Stunden auf 200 - 220°C erhitzt wobei 25 g Destillat aufgefangen wurden. Überdestilliertes Undecenol (2 g) wurde in die Reaktion zurückgeführt. Man erhielt 515 g eines weißen Pulvers. Die so

6

modifizierte Kieselsäure wird von Wasser nicht benetzt. Methanolbenetzbarkeit 36 Gew. %.

Aus 20 g dieses Produktes ließen sich mit 500 ml Toluol in einer Soxleth-Apparatur durch 15 stündiges Refluxieren 0,6 g Öl extrahieren.

**Beispiel 3** **Mit Stearylalkohol oberflächenbehandelte Kieselsäure**

500 g Vulkasil S (hochaktive gefällte Kieselsäure mit BET-Oberfläche 180 $m^2$/g der Bayer AG) und 50 g Stearylakohol wurden unter Rühren 4 Stunden auf 200 - 220°C erhitzt, wobei 21 g Wasser aufgefangen wurden. Man erhielt 522 g eines farbloseen Pulvers. Die so modifizierte Kieselsäure wird von Wasser nicht benetzt. Methanolbenetzbarkeit: 36 Gew. %.

**Beispiel 4** **Mit Olivenöl oberflächenbehandelte Kieselsäure**

300 g Vulkasil S (hochaktive gefällte Kieselsäure mit BET-Oberfläche 180 $m^2$/g der Bayer AG) und 30 g Olivenöl werden 4 Stunden auf 200 - 220° C erhitzt wobei 13 g Wasser aufgefangen werden. Man erhielt 313 g eines farblosen Pulvers. Die so modifizierte Kieselsäure wird von Wasser nicht benetzt. Methanolbenetzbarkeit: 11 Gew.-%.

**Beispiel 5** **Mit Ricinusöl und Silan oberflächenbehandelte Kieselsäure**

500 g Vulkasil S (hochaktive gefällte Kieselsäure mit BET-Oberfläche 180 $m^2$/g der Bayer AG), 50 g Ricinusöl und 5 g Bis-(triethoxisilylpropyl)-tetrasulfid (Si 69, Degussa AG) werden 7 Stunden unter Rühren auf 170° C erhitzt wobei Wasser und Ethanol aodestillieren. Man erhielt 532 g eines hellbraunen Pulvers. Die so modifizierte Kieselsäure wird von Wasser nicht benetzt. Methanolbenetzbarkeit: 15 Gew. %.

**Beispiel 6:** **Mit Ricinusöl oberflächenbehandelte Kieselsäure**

550 g Vulkasil S (hochaktive gefällte Kieselsäure mit BET-Oberfläche 180 $m^2$/g der Bayer AG) und 27,5 g Ricinusöl wurden in einem Dreihalskolben mit Rührwerk und Destillationsbrücke 4 Stunden unter Rühren in einem Ölbad auf 200°C Ölbadtemperatur erhitzt, wobei Wasser abdestillierte. Man erhielt 546 g eines weißen Pulvers. Die auf diese Weise hydrophobierte Kieselsäure wird im Gegensatz zum Ausgangsprodukt von Wasser nicht benetzt und besitzt eine Methanolbenetzbarkeit von 15 Gew. %.

**Beispiel 7 + 8:** **Herstellung von Kieselsäure/Lösungskautschukmischungen**

**Beispiel 7a** **L-SBR / Kieselsäure gemäß Beispiel 4**

200 g Lösungs-Styrol/Butadien-Kautschuk Buna VSL 4020-0 (Bayer AG) mit einem Gehalt an gebundenem Styrol von 20 Gew. % und einem 1.2-Vinyl-Gehalt von 40 Gew. % sowie 1 g Vulkanox BKF (Phenolisches Antioxidans, Bayer AG) wurden in 2 l Cyclohexan gelöst. Dann setzte man 200 g der oberflächenmodifizierten Kieselsäure aus Beispiel 4 zu und tropfte diese Suspension unter Rühren in 2 l auf 70°C vorgeheiztes Wasser, wobei gleichzeitig Wasserdampf (100-110°C) eingeleitet wurde. Dauer: 2 Stunden. Nach beendeter Zugabe der Kautschuk/Kieselsäure-Suspension wurde noch 20 Minuten lang Wasserdampf eingeleitet. Nach dem Abtrennen erhielt man ein feuchtes krümeliges Produkt, in dem die Kieselsäure von Kautschuk gleichmäßig umschlossen war. Die getrocknete Ausbeute betrug 386 g (96 %).

**Beispiel 7b:** (Vergleichsbeispiel)
L-SBR / unbehandelte Fällungskieselsäure

Es wurde wie in Beispiel 7a verfahren, wobei jedoch statt der modifizierten Kieselsäure aus Beispiel 4 200 g einer (unmodifizierten) hochaktiven gefällten Kieselsäure mit einer BET-Oberfläche von 180 $m^2$/g (Vulkasil S, Bayer AG) eingesetzt wurde. Ergebnis: Das Abwasser war stark getrübt und ein großer Teil der Kieselsäure hatte sich dort abgelagert. Diese Kieselsäure war in der Mischung nicht gleichmäßig verteilt, sondern große Anteile waren von Kautschuk nicht umschlossen. Die Ausbeute betrug 227 g (57 %).

**Beispiel 8a** **L-SBR / Kieselsäure gemäß Beispiel 1 (100 phr)**

200 g Lösungs-Styrol/Butadien-Kautschuk Buna VSL 4020-0 (Bayer AG) mit einem Gehalt an gebundenem Styrol von 20 Gew.-% und einem 1,2-Vinyl-Gehalt von 40 Gew.-% sowie 1 g Vulkanox BKF (Phenolisches Antioxidans der Bayer AG) werden in 2 l Cyclohexan gelöst. Dann setzt man 200 g oberflächenmodifizierte Kieselsäure aus Beispiel 1 hinzu, rührt zum Homogenisieren 45 Minuten bei 70°C nach und treibt anschließend das Lösungsmittel mit 100-110°C heißem Wasserdampf ab. Man erhält ein krümeliges feuchtes Produkt, in dem die Kieselsäure gleichmäßig umschlossen ist. Das Abwasser ist klar und frei von Feststoffpartikeln. Nach dem Trocknen (70°C im Vakuum) verbleiben 399,6 g eines Kautschuk/Kieselsäure Masterbatches.

Verfährt man nach dem gleichen Verfahren und ersetzt die 200 g der Kieselsäure gemäß Beispiel 1 durch die angegebene Menge einer anderen Kieselsäure so erhält man folgende Resultate:

| Beispiel | Kieselsäure | Menge | Produkt | Abwasserqualität |
|---|---|---|---|---|
| Beispiel 8b | gem. Bsp. 2 | 200 g | 400 g (100 %) homogen | klar, ohne Feststoffe |
| Beispiel 8c | gem. Bsp. 3 | 200 g | 398 g (99,5 %) homogen | klar, ohne Feststoffe |
| Beispiel 8d | gem. Bsp. 4 | 200 g | 398 g (99,5 %) homogen | klar, ohne Feststoffe |
| Vergleich A | Vulkasil S | 200 g | 334 g (83 %) sehr inhomogen | trübe, große Mengen Kieselsäure |

**Beispiel 8e L-SBR / Kieselsäure gemäß Beipiel 1 / aromatischer Weichmacher**

200 g Lösungs-Styrol/Butadien-Kautschuk Buna VSL 4020-0 (Bayer AG) sowie 1 g Vulkanox BKF (phenolisches Antioxidans, Bayer AG) wurden in 2 l Cyclohexan gelöst. Dann setzte man 75 g aromatisches Mineralöl Renopal 450 (Fuchs Mineralöl werke) hinzu und 200 g der hydrophobierten Kieselsäure gemäß Beispiel 1 und rührte 45 Minuten bei 70° C. Anschließend wurde das Lösungsmittel mit 100 - 110° heißem Wasserdampf aodestilliert. Zurück blieb eine braunes krümeliges Produkt, in dem die Kieselsäure gleichmäßig verteilt vorlag. Das Abwasser war klar und frei von Feststoffen. Nach dem Trocknen verblieben 474 g (99,6 %) einer homogenen Kautschuk/Füllstoff-Mischung.

**Beispiel 8f** Ölverstreckter L-SBR / Kieselsäure gemäß Beispiel 6

Es wurde wie in Beispiel 8e verfahren, wobei in eine Lösung von 687,5 g ölverstreckten Kautschuk Buna VSL 5025-1 (Bayer AG), 2,5 g Vulkanox BKF (Bayer AG) in 4 l Cyclohexan 400 g der Kieselsäure gemäß Beispiel 6 eingerührt wurde. Nach der Wasserdampfdestillation und Trocknen resultierten 1080 g (99,1 %) ölverstreckte Kautschuk/Füllstoffmischung (100 phr Kautschuk / 80 phr behandelte Kieselsäure / 37,5 phr Öl) mit einer Mooney-Viskosität ML 1+4 (100° C) 178. Das Abwasser nach der Wasserdampfdestillation war klar und frei von Kieselsäure.

**Beispiel 9**

Die folgenden Kautschukmischungen wurden in einem 300 ml Kneter bei 130° C mit 5 Minuten Mischzeit hergestellt. Schwefel und Beschleuniger wurden anschließend auf der Walze bei 50° C zugegeben. Die angegebenen Mengen beziehen sich auf Gewichtsteile.

|  | A | B |
|---|---|---|
| BR-Kautschuk Buna CB 24 (Bayer AG) | 25 | 25 |
| Kieselsäure Vulkasil S (Bayer AG) | 5 | 5 |
| Kieselsäure / L-SBR Masterbatch gem. Bsp. 8a | 150 | 0 |
| Kieselsäure / L-SBR Masterbatch gem. Bsp. 8b | 0 | 150 |
| Ruß Corax 339 (Degussa) | 6,5 | 6,5 |
| aromat. Öl | 32,5 | 32,5 |
| Zinkoxid | 2,5 | 2,5 |
| Stearinsäure | 1 | 1 |

(fortgesetzt)

|  | A | B |
|---|---|---|
| Antioxidans Vulkanox 4020 (Bayer AG) | 1 | 1 |
| Ozonschutzwachs Antilux 654 (Rheinchemie) | 1,5 | 1,5 |
| Silan Si 69 (Degussa) | 6,5 | 6,5 |
| Schwefel | 1,5 | 1,5 |
| Beschleuniger Vulkacit CZ (Bayer AG) | 1,5 | 1,5 |
| Beschleuniger Vulkacit D (Bayer AG) | 2 | 2 |
|  |  |  |
| Mischungsviskosität ML 1+4 (100°C): | 49 | 48 |

Die Kautschukmischungen wurden anschließend 35 Minuten bei 160°C zu 1 mm dicken Platten vulkanisiert. Man erhielt folgende mechanische Eigenschaften:

|  | A | B |
|---|---|---|
| Bruchdehnung (%): | 515 | 595 |
| Zugfestigkeit (MPa): | 18,0 | 18,7 |
| Spannungswert bei 100 % Dehnung (MPa): | 2,0 | 2,0 |
| Spannungswert bei 300 % Dehnung (MPa): | 8,0 | 7,0 |

**Beispiel 10**

Die folgende Kautschukmischung wurde in einem 1,5 Kneter bei 130° C mit 5 Minuten Mischzeit hergestellt. Schwefel und Beschleuniger wurden anschließend auf der Walze bei 50° C zugegeben. Die angegebenen Mengen beziehen sich auf Gewichtsteile.

|  | A |
|---|---|
| Ölverstreckte Kautschuk/Kieselsäure-Mischung gemäß Bsp. 8f | 217,5 |
| Ruß Corax 339 (Degussa) | 6,5 |
| Zinkoxid | 2,5 |
| Stearinsäure | 1 |
| Antioxidans Vulkanox 4020 (Bayer AG) | 1 |
| Ozonschutzwachs Antilux 654 (Rheinchemie) | 1,5 |
| Silan Si 69 (Degussa) | 6,5 |
| Schwefel | 1,5 |
| Beschleuniger Vulkacit CZ (Bayer AG) | 1,5 |
| Beschleuniger Vulkacit D (Bayer AG) | 2 |
|  |  |
| Mischungsviskosität ML 1+4 (100°C): | 82 |

Die Kautschukmischungen wurden anschließend 35 Minuten bei 160°C vulkanisiert.
Man erhielt folgende mechanische Eigenschaften:

|  | A |
|---|---|
| Bruchdehnung (%): | 398 |
| Zugfestigkeit (Mpa): | 17,3 |
| Spannungswert bei 100 % Dehnung (Mpa): | 3,4 |
| Spannungswert bei 300 % Dehnung (Mpa): | 12,6 |
| Rückprallelastizität bei 23° C (%) | 14 |
| Rückprallelastizität bei 70° C (%) | 45 |
| Härte bei 23° C (Shore A) | 72 |
| Härte bei 70° C (Shore A) | 66 |
| Abrieb nach DIN 53.516 (ccm) | 113 |

**Patentansprüche**

1. Verfahren zur Herstellung von Mischungen aus oxidischen und/oder silikatischen Füllstoffen und Kautschuken, dadurch gekennzeichnet, daß man der Lösung eines Kautschuks in einem organischen Lösungsmittel mindestens einen hydrophobierten oxidischen und/oder silikatischen Füllstoff in Mengen von 0,5 bis 300 Gew.-Teilen, bezogen auf 100 Gew. Teile Kautschuk, zusetzt, wobei die Lösung der Kautschuke weitere Hilfsmittel für die Aufarbeitung, Verarbeitung und Stabilisierung sowie zusätzliche Füllstoffe enthalten kann, und anschließend das Lösungsmittel bei Temperaturen von 50 bis 200°C durch Wasserdampfdestillation entfernt.

2. Verfahren gemäß Anspruch 1, dadurch gekennzeichnet, daß als oxidische und/oder silikatische Füllstoffe solche eingesetzt werden, die bei Raumtemperatur nicht von Wasser benetzt werden und eine Methanolbenetzbarkeit von 1 bis 60 besitzen.

3. Verfahren gemäß Anspruch 1, dadurch gekennzeichnet, daß der eingesetzte Kautschuk ein in Lösung polymerisiertes Polybutadien, Styrol/Butadien-Copolymer, Isobutylen/Isopren-Copolymer, Ethylen/Propylen/Dien-Copolymer oder Polyisopren ist.

4. Verfahren gemäß Ansprüchen 1 bis 3, dadurch gekennzeichnet, daß oxidische und/oder silikatische Füllstoffe verwendet werden, welche

   (A) vor, während oder nach einer Trocknungsbehandlung, durch die der Gehalt an physikalisch gebundenem Wasser auf ≤ 3 Gew. % gesenkt wird, mit 0,5 bis 200 Gew. Teilen einer wasserunlöslichen organischen Verbindung (I), versetzt wurden
   oder

   (B) vor, während oder nach einer Trockungsbehandlung, durch die der Gehalt an physikalisch gebundenem Wasser auf ≤ 3 Gew. % gesenkt wird, unter teilweiser oder vollständiger Umsetzung der Silanolgruppen mit 0,5 bis 200 Gew.-Teilen einer hydroxylgruppenhaltigen Verbindung (II), zur Reaktion gebracht wurden
   oder

   C) vor, während oder nach einer Trocknungsbehandlung, durch die der Gehalt an physikalisch gebundenem Wasser auf ≤ 3 Gew. % gesenkt wird, unter teilweiser oder vollständiger Umsetzung der Silanolgruppen mit 0,1 bis 50 Gew.-Teilen, jeweils bezogen auf 100 Gew.-Teile Füllstoff, einer Siliciumverbindung (III) zur Reaktion gebracht wurden.

5. Kautschukmischungen gemäß Ansprüchen 1 bis 4, dadurch gekennzeichnet, daß sie neben Kautschuk, Füllstoff und weiteren Kautschukhilfsmitteln 0,5 bis 15 Gew. Teile schwefelhaltigen Silylether, bezogen auf 100 Gew. Teile Kautschuk, enthalten.

**6.** Verwendung der nach Anspruch 1 hergestellten Kautschukmischungen zur Herstellung von Formkörpern, insbesondere Reifen.

| Europäisches Patentamt | **EUROPÄISCHER RECHERCHENBERICHT** | Nummer der Anmeldung EP 98 11 1966 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,D | DE 22 55 577 A (DEUTSCHE GOLD- UND SILBER-SCHEIDEANSTALT) 6. Juni 1974 * Ansprüche 1,2 * --- | 5 | C08J3/21 C08K9/04 //C08L21:00 |
| Y | DE 11 75 875 B (CHEMISCHE WERKE HÜLS) * Anspruch 1 * * Spalte 3, Zeile 1 - Spalte 3, Zeile 11 * --- | 1,3,4,6 | |
| Y | US 3 691 129 A (O.W. BURKE) 12. September 1972 * Ansprüche 1,2 * * Spalte 3, Zeile 34-68 * * Spalte 4, Zeile 28-38 * --- | 1,3,4,6 | |
| Y | EP 0 753 549 A (BAYER AG) 15. Januar 1997 * Ansprüche 1,2 * * Seite 6, Zeile 24 - Seite 6, Zeile 32 * --- | 1,3,4,6 | |
| Y | DATABASE WPI Week 8038 Derwent Publications Ltd., London, GB; AN 80-67329C XP002083284 & SU 713 878 A (KOSMODEMYANSKII) * Zusammenfassung * ----- | 1,3,4,6 | |

| RECHERCHIERTE SACHGEBIETE (Int.Cl.6) |
|---|
| C08J C08K |

Der vorliegende Recherchenbericht wurde für alle Patentansprüche erstellt

| Recherchenort | Abschlußdatum der Recherche | Prüfer |
|---|---|---|
| DEN HAAG | 5. November 1998 | Hallemeesch, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument